# EUROPEAN PATENT APPLICATION

(11) **EP 1 743 802 A1**
(43) Date of publication of application: **17.01.2007**
(21) Application number: 06014413.6
(22) Date of filing: 11.07.2006
(51) Int. Cl.: B60Q 3/02, B60R 7/06

(54) **Vehicle interior illumination system**

(30) Priority: 13.07.2005 JP 2005204403
(71) Applicant: Mazda Motor Corporation, Aki-gun, Hiroshima 730-8670 (JP)
(72) Inventor: Wahara, Sachio, Aki-gun Hiroshima 730-8670 (JP); Okazaki, Yuji, Aki-gun Hiroshima 730-8670 (JP); Yoshimura, Mitsuko, Aki-gun Hiroshima 730-8670 (JP)
(74) Representative: Müller-Boré & Partner Patentanwälte

(57) **Abstract**

There is provided a vehicle interior illuminating system. The system comprises a storage space (20) arranged in the vehicle interior. The system comprises a light source (15) arranged away from said storage space (20) and irradiating light (α) to the vehicle interior. The system further comprises a reflector (30;31) arranged in the vehicle interior to reflect light (α) irradiated from the light source (15) and direct it (β) to inside of the storage space (20). The reflector (30;31) arranged in the vehicle interior may reflect the light (α) from the light source (15) and direct it (β) to the inside of the storage space (20) so as to illuminate it. Therefore, the inside of the storage space (20) can be seen even in the dark, while volume of the storage space (20) can be maintained since a light source (15) dedicated for the storage space (20) is not necessary.

## Description

This description relates to a vehicle interior illuminating system, particularly relates to an illuminating system for a storage space in a vehicle interior.

Generally a storage space may be arranged in an instrument panel or in its vicinity. The storage space may be or comprise a concave portion formed in the instrument panel or a center console which is arranged between a driver's seat and a front passenger seat and extending longitudinally and rearward from the instrument panel. The concave storage space such as a glove box may be illuminated with a light source arranged inside for convenience of vehicle occupants especially in the dark. Although this type of illumination is useful, it may not necessarily be the best solution to provide a light source arranged inside for every one of the storage spaces, for reasons including complexity of a wiring system arranged behind for the light sources.

When the storage space is vertically concave, a vehicle occupant can see the inside of the storage space by illuminating it with a light source on the vehicle ceiling such as that described in U.S. Patent 6,871,986. The '986 patent describes a system for illuminating a center part of an instrument panel with a light emitting diode (LED) in a front of the vehicle interior ceiling in a vicinity of an interior rear-view mirror. The LED radiates light on a center part of an instrument panel to make it visible in the dark. This system may reduce complexity of the wiring system for the light source behind the instrument panel.

However when the storage space is horizontally concave, a vehicle occupant can hardly see the inside without a conventional light source arranged inside of the storage space, since the light source outside of the storage space for example on the vehicle ceiling such as that described in '986 patent can emit light only on an object which is located to directly face the light source, so that a volume required for arrangement of the light source and its wiring reduces the storage space volume.

The inventors herein have recognized the disadvantage of the above system and needs to increase the visibility and the volume of the storage space and reduce the complexity of the wiring system for the light source.

This object is solved according to the invention by a vehicle interior illuminating system according to claim 1. Preferred embodiments of the invention are subject of the dependent claims.

Accordingly, in one aspect of the present invention, there is provided a vehicle interior illuminating system. The system comprises a storage space arranged in the vehicle interior, for example a horizontally concave storage space arranged under an instrument panel or at a front end of a center console of the vehicle. The system comprises a light source arranged away from said storage space and irradiating light to the vehicle interior, for example a spotlight arranged on a ceiling of the vehicle to irradiate light downward. The system further comprises a reflector arranged in the vehicle interior to at least partly reflect light irradiated from the light source and direct it to inside of the storage space, for example, the reflector may face an opening of the concave storage space and be part of a glossy garnish.

In accordance with this system, the reflector arranged in the vehicle interior may reflect the light from the light source and direct it to the inside of the storage space so as to illuminate it. Therefore, the inside of the storage space can be seen even in the dark, while volume of the storage space can be maintained since a light source dedicated for the storage space is not necessary.

According to the invention, there is provided a vehicle interior illuminating system comprising:
a storage space arranged in the vehicle interior;
at least one light source arranged away from said storage space and irradiating light to the vehicle interior; and
a reflector arranged in the vehicle interior to reflect light irradiated from said light source and at least partly direct it to inside of said storage space.

According to a preferred embodiment of the invention, said reflector has at least one reflective inclined surface so as to direct the light irradiated from said light source into said storage space.

Preferably, said light source is arranged on or near a ceiling of the vehicle interior to irradiate light substantially downward.

Further preferably, said storage space is an at least horizontally concave portion which is arranged at least partly under an instrument panel of the vehicle and wherein said reflector is arranged preferably in rear of said instrument panel in a vehicle forward driving direction.

Still further preferably, said concave portion has an opening which substantially faces said reflector.

Further preferably, the vehicle interior illuminating system further comprises at least one drawer arranged in said instrument panel and able to take a retracted position or a drew- or draw-out position so that said drawer is located above at least part of said concave portion when said drawer takes said draw-out position.

Most preferably, said drawer comprises a cup holder.

According to a further preferred embodiment of the invention, the vehicle interior illuminating system further comprises an instrument panel extending laterally in front of front seats of the vehicle and a center console extending longitudinally between said front seats, and wherein said storage space is an at least horizontally concave portion arranged at a front end of said center console and located at least partly under said instrument panel.

Preferably, said reflector is part of a glossy garnish arranged on said center console.

Further preferably, said garnish is substantially ring shaped to at least partly surround a gearshift lever.

Still further preferably, said reflector has a reflective surface inclined downward as it is closer to said storage space so as to at least partly reflect the light irradiated from said light source into said storage space.

Further preferably, said lighting source comprises or is a spotlight.

According to another aspect of the invention, there is further provided an illuminating system for vehicle interior having an instrument panel extending laterally in front of front seats and a center console extending longitudinally between said front seats, comprising:
at least horizontally concave storage space which is formed at or near a front of said center console and part of which is located at least partly under said instrument panel; and
a light source arranged on or near the ceiling of the vehicle interior to irradiate light to the vehicle interior;
a reflector formed on or at said center console so as to at least partly reflect the irradiated light from said light source and direct it substantially to said storage space.

According to a preferred embodiment of the invention, said reflector is part of a glossy garnish arranged on said center console.

Preferably, said garnish is ring shaped to surround a gearshift lever.

Further preferably, said gearshift lever is arranged to be away from a straight line extending between said light source and said reflector at least when it is in a forward driving range.

Further preferably, said reflector has a reflective surface inclined downward as it is closer to said storage space so as to direct the light irradiated from said light source into said storage space.

Still further preferably, said spotlight irradiates light oriented to said center console.

Most preferably, said spotlight is located in front of a torso of an occupant sitting on said front seat.

The advantages described herein will be more fully understood by reading an example of an embodiment in which the invention is used to advantage, referred to herein as the Detailed Description, with reference to the drawings. It should be understood that even though embodiments are separately described, single features thereof may be combined to additional embodiments.

Figure 1 is a perspective view showing a vehicle interior of an embodiment of the present description;
Figure 2 is a sectional view of the vehicle interior of Figure 1 along a center console;
Figure 3 is a detailed view of Figure 2 showing a reflector and a storage space of an embodiment of the present description;
Figure 4 is a detailed view of Figure 2 showing a second embodiment of the present description;
Figure 5 is a detailed view of Figure 2 showing a third embodiment of the present description; and
Figure 6 is a detailed view of Figure 2 showing a fourth embodiment of the present description.

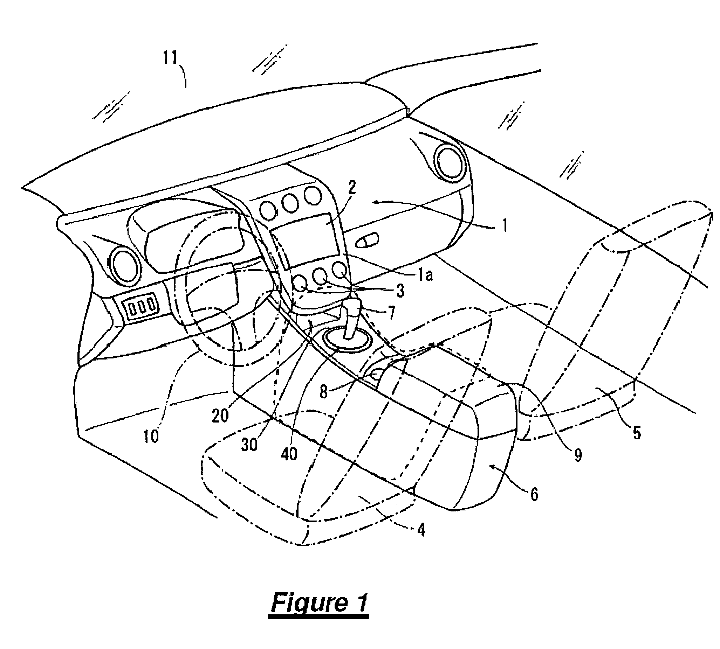

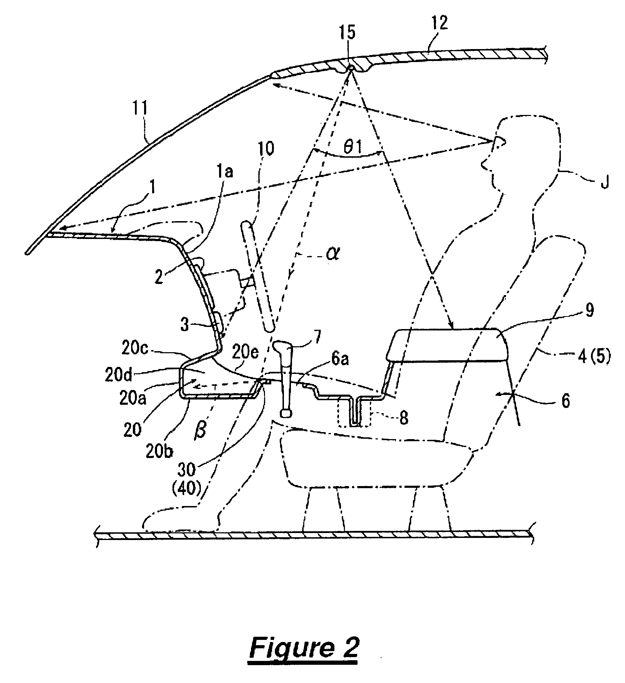

A first preferred embodiment of the inventionwill be described with reference to FIGS: 1 to 3. There is shown in Figures 1 and 2 generally an interior of an automotive vehicle which comprises an instrument panel 1 which extends substantially in a vehicle lateral direction in front of a driver's seat 4 and a front passenger seat 5 as is well known in the art. The instrument panel 1 has, at its intermediate or substantially center part in the vehicle lateral direction, a center panel 1a which substantially vertically extends and is equipped particularly with a display screen 2 and various switches 3 for a climate control and/or an audio system. A center or intermediate console 6 substantially longitudinally extends between the driver's seat 4 and the front passenger seat 5. The center console 6 has a gearshift lever 7 (or the operational lever of an automatic or manual transmission), a cup holder 8 and/or a storage box 9 with a lid capable to swing to at least partly close it. Also arranged in the vehicle interior are a steering wheel 10 and a front windshield 11 as is well known in the art.

In Figure 2, an occupant J is shown to sit on the driver's seat 4 or the passenger seat 5. A light source (specifically a spotlight) 15 is arranged on or near a ceiling 12 in an intermediate position (preferably substantially at its center) in the vehicle lateral direction and substantially in front of the head of the occupant J. Alternatively or additionally, the light source may be arranged at or on a windshield frame and/or on a rearview mirror. In this embodiment the spotlight 15 comprises at least one light emitting diode (LED) although it may be comprised of any type of light source appropriate for a particular illuminating purpose.

An irradiation range of the spotlight 15 may be a substantially circular or elliptic shape preferably with a diameter of approximate 1 meter or more at a point separated from the light source by about 1.5 meters. When installed on the vehicle, the irradiation range or cone of the light source 15 is set to be limited to the proximity of the center console 6 as shown in Figure 2 in two-dotted broken lines.

The irradiation range of the light source 15 extends in the vehicle longitudinal direction from under the center panel 1 a to the proximity of the rear end of the storage box 9. In Figure 2, the irradiation range of the light source 15 in the longitudinal direction is illustrated with an irradiation angle θ1.

The irradiation range of the light source 15 substantially in the vehicle lateral direction preferably is set a little bit wider than the center console 6. More specifically, the irradiation range preferably is configured so that the irradiated light from the light source 15 does not illuminate a shoulder of the occupant J sitting on either of the front seats 4 and 5. Then the irradiated light from the light source 15 may not dazzle the occupant J.

In addition to less consumption of electricity, the usage of LED as the light source 15 has an advantage of illuminating a limited area since the irradiated light from LED has a better straightness so that the LED will be preferable in preventing dazzling the occupant J. Also, using a blue based color for the light source 15 may give the passengers a less dazzling impression and create luxurious atmosphere in the vehicle interior.

A front end of the center console 6 is at least partly extended to under the center panel 1 a. A storage space 20 is formed in or at (preferably the front end of) the center console 6, preferably where occupants sitting on the driver's seat 4 and the front passenger seat 5 can easily reach to. The center panel 1 a of the instrument panel 1 is located over a front portion (preferably over substantially a front half) of the storage space 20. The storage space 20 is at least partly enclosed by a front wall 20a, a bottom wall 20b, an upper wall 20c and a pair of side walls 20d to make relatively large internal volume due to its location at or just under the center panel 1 a of the instrument panel 1. There substantially is not a rear wall, in other words, the rear and/or rear upper part is formed an opening or passage 20e to the vehicle interior. And the upper wall 20c at its rear end connects to the center panel 1 a at its lower end, so that the storage space preferably is made horizontally concave. The instrument panel 1 and the center console 6 may be formed with separate members. The lower end of the center panel 1 a may be a boundary portion connecting the separate members with each other, while the boundary portion may be changed accordingly.

In Figure 2, a reflector 30 is shown on the center console 6 just in front of the gearshift lever 7. The reflector 30 preferably is made of part of a glossy garnish arranged around the gearshift lever 7 to receive the irradiated downward light α from the light source 15 and reflect the irradiated light α so that the reflected light β directs to the inside of the storage space 20. Preferably, the reflector 30 has a reflectivity of more than about 70 %, more preferably more than about 90 % with respect to the visible light ray. In this embodiment, the reflector 30 is located in rear of the lower end of the center panel 1 a, the light source 15 is located in rear of the reflector 30 and the irradiated light α proceeds to the reflector 30 substantially from the upper rear.

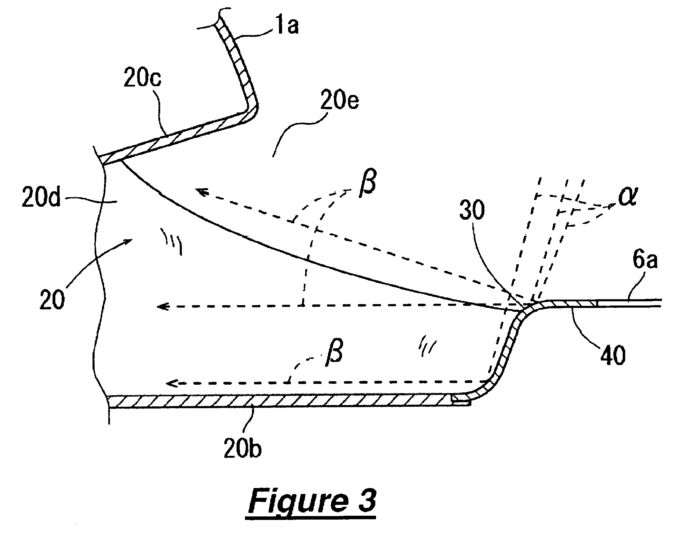

The detail of the reflector 30 will now be described with reference to Figures 2 and 3. At first, an opening 6a is formed on the center console 6 to accommodate the gearshift lever 7 within its perimeter. And an upper face cover member 40 preferably substantially of ring shape is attached to the center console 6 so as to at least partly surround the gearshift lever 7. The upper face cover member 40 improves the appearance of the opening perimeter of the hole 6a. In other words, the upper face cover member 40 functions as the garnish or a bezel. Further, a shift position indicator is provided on the upper surface of the upper face cover member 40, and in the embodiment, since the gearshift operating lever 7 preferably is for an automatic transmission, the indicator shows a gearshift position out of, for example, P (parking), R (reverse), N (neutral), D (drive), 2 (second), 1 (first or low gear) arranged separately in the vehicle longitudinal direction, as is well known in the art.

While the upper face cover member 40 may be made, for example, of metal or synthetic resin (plastic), its upper surface is made glossy or reflective. That is, in a case that it is made of metal, it will have gloss (especially metal gloss) on the upper face even if uncoated, while in a case that it is made of synthetic resin, the upper face will be made to have enough gloss (luster) by coating it with metal plating or lacquer or polish. While the front end portion of this upper face cover member 40 is made to at least partly form the reflector 30, reflection efficiency can be improved by machining a portion corresponding to the reflective portion 30 substantially to mirror finish. The reflector 30 has substantially arc shaped cross section so that a point of the reflection surface is located gradually lower as it proceeds forward. When the reflector receives the substantially downward irradiated light α from the light source 15, the irradiated light α will be at least partly reflected on the reflector 30, and the reflected light β will proceed substantially forward and into the deep inside of the storage space 20. This will enable the occupant J to clearly view the inside of the storage space 20 all the time. Since the surface of the reflector 30 preferably has the substantially arc shaped cross section, the reflected light β will be widely dispersed in the vertical plane rather than formed to be parallel beams, to illuminate the overall inside of the storage space 20. The direction of reflected light β to the inside of the storage space 20, may be optionally set to be, for example, a substantially perpendicular direction to the front wall 20a, a direction toward a front end portion of the bottom wall 20b (direction gradually directing downward as it proceeds forward), or a combination of them, considering a direction of the irradiated light α to the reflector 30 as well as depending on a way of setting a reflective angle at the reflector 30.

When the gearshift lever 7 is operated to a most forward position (in a case of an automatic transmission, usually when operated to the P range), the irradiated light α preferably will be able to directly reach the reflector 30 without being interrupted by the gearshift lever 7. In other words, the irradiated light α from the light source 15 to the reflector 30 preferably passes in front of the gearshift member 7 positioned at the most forward position.

Alternatively, the gearshift lever 7, the light source 15 and the reflector 30 may be arranged so that, while when the gearshift lever 7 is positioned into a range position for forward driving such as D range, the irradiated light α can directly reach the reflector 30 without being interrupted by the gearshift lever 7, although when the gearshift lever 7 is positioned in the P range, it at least partly interrupts the irradiated light α from the light source 15 to the reflector 30. With this arrangement, the inside of the storage space 20 can be illuminated at least in forward driving (such as when the gearshift level 7 is positioned in the D range) where the illumination is most needed. Although the inside of the storage space 20 may not be illuminated enough as the gearshift lever 7 positioned in the P range at least partly interrupts the irradiated light from the light source 15, a room lamp (not shown) is arranged on a ceiling 12 above rear seats at a laterally central position as known in the art so as to illuminate the overall vehicle interior and eventually the storage space 20 by optionally lighting this room lamp when a vehicle is parked.

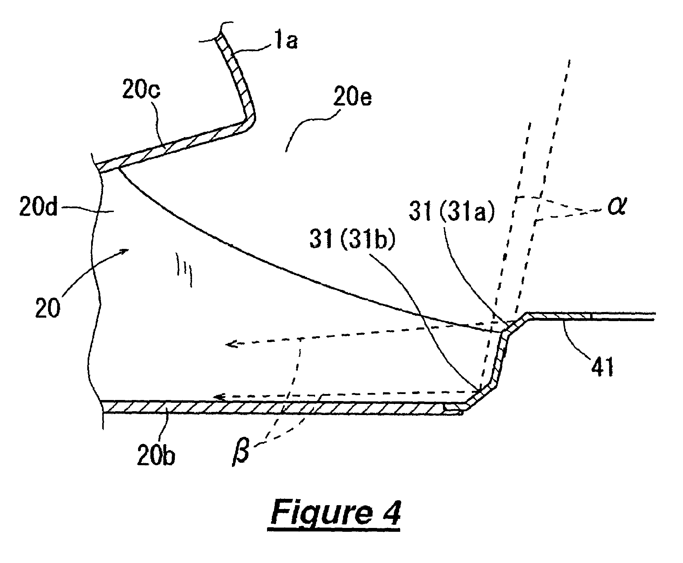

Figure 4 shows a reflector 31 according to a second preferred embodiment of the present description. This is a modified example of the reflector 30 of the first embodiment and anything other than the reflector is similar or same in the both embodiments. In the second embodiment, a reflector 31 (corresponding to the reflector 30) formed on or near an upper face cover member 41 (corresponding to the upper face cover member 40) is formed by a plurality (two in the second embodiment) of substantially straight and vertically spaced inclined planes 31 a and 31 b. The inclined planes 31 a and 31 b are substantially flat planes gradually orienting downward as they proceed forward. The irradiated light α from the light source 15 is reflected by the respective inclined planes 31 a and 31 b and the reflected light β will direct into the storage space 20, then it is possible to accurately orient the direction of the reflected light β since the planes 31 a and 31 b are substantially flat planes (alternatively it may be possible to make the reflected light β to be spot shaped not dispersed as much as possible to direct it into the inside of the storage space 20).

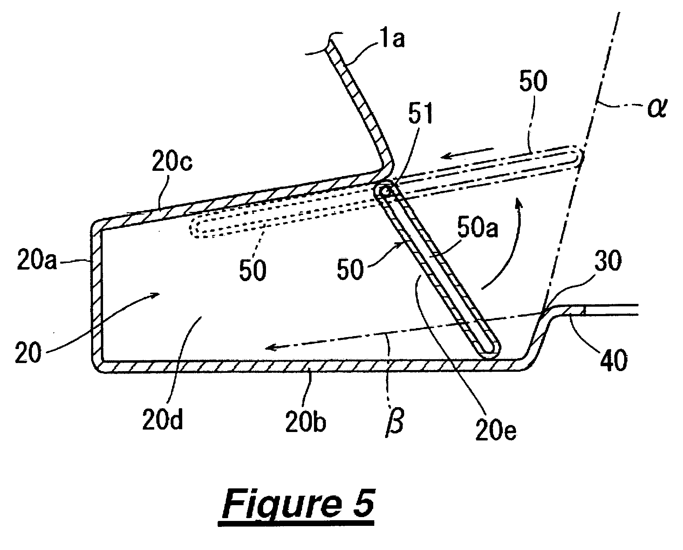

Figure 5 shows the storage space 20 according to a third preferred embodiment of the present description. In this embodiment, a lid 50 can cover the opening 20e of the storage space 20 with any other configuration similar to the cases of the above embodiments. A pivot 51 extending laterally in the vehicle is affixed to the side walls 20d of the storage space 20 at an upper end region of the opening 20e. Therefore, the lid 50 can selectively take a closed position shown in Figure 5 by solid line and an open position shown in Figure 5 by dot line. To move the lid 50 from the closed position to the open position, at first the lid member at the closed position may be swung around the pivot 51 so that its lower end directs upward as shown in Figure 5 by one dotted chain line, then the lid 50 may be slid forward (the pivot 51 is slid in the guide groove 50a). The opposite procedure may be taken to move the lid 50 from the open position to the closed position. It should be understood, that the lid 50 may open and/or close along any other suitable path such as rotating, pivoting, sliding any combination thereof and so on. Furthermore, the lid 50 may be formed in a flexible form or may have a shutter-like configuration of solid elements being hingedly connected with each other.

In this embodiment, the light source 15 may illuminate the inside of the storage portion 20 through the reflector 30 (or 31) when the lid 50 is at least partly open. And when the lid member 50 is closed, the reflected light β irradiates to the lid member 50 so that it will be possible to clearly see a position of the lid member 50 even in the dark and it will be preferable on easily operating to open or close the lid member 50 or the like.

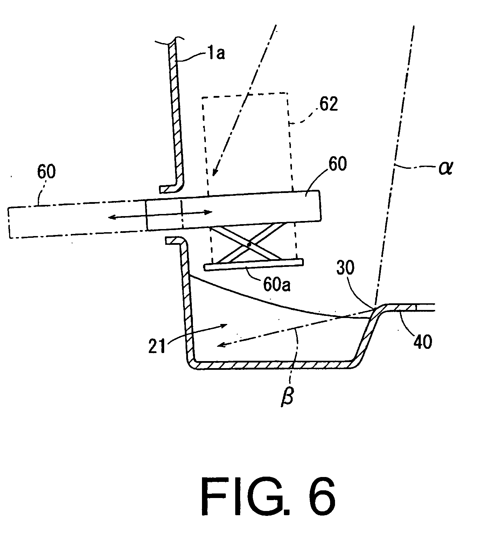

Figure 6 shows a fourth preferred embodiment of the present description. In this embodiment, a storage space 21 (corresponding to the storage space 20) is not directly covered under the center panel 1a. However, a drawer 60 which may be longitudinally slid is provided in the center panel 1a, and when the drawer 60 is drew into a usage condition as shown in Figure 6 by solid line, front part in the vehicle forward driving direction of the storage space 21 will be located under the drawer 60. Then, the light source 15 can not directly irradiate the inside (front part) of the storage space 21. However, even when the drawer 60 is drew out for its usage, the reflected light β by the reflective portion 30 (or 31) can at least partly illuminate the front part of the storage space 21.

The drawer 60 in the embodiment is a cup holder. When drew out, a bottom plate 60a (a receiving plate for a drink can 62 shown in Figure 6 by broken line) suspended by a link mechanism and to hold a drink cup will be automatically moved downward, and when pushed into a retracted state, the bottom plate 60a is automatically moved upward and the overall drawer 60 will be thinner so as to be retracted into the center panel 1a. Since this type of drawer 60 is already in practical use and well known in the art, detailed structure is well known in the art so that it is not described herein. Of course, the drawer 60 is not limited to a cup holder but may be for example a display screen for a navigation system, an operating panel for audio, for storing small objects (such as credit cards, coins, keys) or anything appropriate.

Having described the embodiments above, they may be modified appropriately including the following. The storage space 20 (21) is not limited to that integrally formed in the center console 6, but it may be formed integrally in the instrument panel 1, or may be formed of a member separate from the center console 6 and the instrument panel 1. The front end of the center console 6 may be at a position well behind the rear end of the center panel 1 a and this space between the front end of the center console 6 and the rear end of the center panel 1 a may be set as an aisle for so-called walk-through where the occupant J can move between the driver's seat 4 and the front passenger seat 5. The light source 15 may be lighted up and down synchronously with turning on and off a small light such as a side marker light, or lighted up and down by an operation of a manual switch separately provided. In a case that one single light source 15 can not occupy a desired range, two or three light sources or more may illuminate one limited area cooperatively with each other.

### REFERENCE NUMERAL LIST:

instrument panel 1
center panel 1 a
a display screen 2
various switches 3
driver's seat 4
passenger seat 5
center or intermediate console 6
opening 6a
gearshift lever 7
cup holder 8
storage box 9
steering wheel 10
ceiling 12
light source (specifically a spotlight) 15
storage space 20
front wall 20a
bottom wall 20b
upper wall 20c
side walls 20d
opening or passage 20e
reflector 30, 31
inclined planes 31 a,31 b
cover member 40
upper face cover member 41
lid 50
pivot 51
drawer 60
bottom plate 60a
drink can 62
occupant J
irradiated light α
reflected light β

## Claims

1. A vehicle interior illuminating system having a storage space (20) arranged in the vehicle interior and at least one light source (15) arranged away from said storage space (20) and irradiating light (α) to the vehicle interior, wherein:
a reflector (30; 31) arranged in the vehicle interior to reflect light (α) irradiated from said light source (15) and at least partly direct it (β) to inside of said storage space (20).

2. The vehicle interior lighting system as described in claim 1, wherein said reflector (30; 31) has at least one reflective inclined surface (31 a; 31 b) so as to at least partly direct the light (α) irradiated from said light source (15) into said storage space (20).

3. The vehicle interior illuminating system as described in claim 1 or 2, wherein said light source (15) is arranged on or near a ceiling (12) of the vehicle interior to irradiate light (α) substantially downward.

4. The vehicle interior illuminating system as described in any one of the preceding claims, wherein said storage space (20) is an at least horizontally concave portion which is arranged at least partly under an instrument panel (1; 1a) of the vehicle and wherein said reflector (30; 31) is arranged in rear of said instrument panel (1; 1a) in a vehicle forward driving direction.

5. The vehicle interior illuminating system as described in any one of the preceding claims, wherein said storage portion (20) has an opening (20e) which substantially faces said reflector (30; 31).

6. The vehicle interior illuminating system as described in any one of the preceding claims, further comprising a drawer (60) arranged in or at said instrument panel (1) and able to take a retracted position or a draw-out position so that said drawer (60) is located above at least part of said storage portion (20) when said drawer (60) takes said draw-out position.

7. The vehicle interior illuminating system as described in any one of the preceding claims, further comprising an instrument panel (1) extending laterally substantially in front of front seats (4; 5) of the vehicle and a center console (6) extending substantially longitudinally between said front seats (4; 5), and wherein said storage space (20) comprises an at least horizontally concave portion arranged at a front end of said center console (1 a) and located at least partly under said instrument panel (1).

8. The vehicle interior illuminating system as described in claim 7, wherein said reflector (30) is part of a glossy garnish arranged on said center console (6).

9. The vehicle interior illuminating system as described in claim 8, wherein said garnish is substantially ring shaped to at least partly surround a gearshift lever (7).

10. The vehicle interior illuminating system as described in any one of the preceding claims, wherein said light source (15) comprises a spotlight.
